# EUROPEAN PATENT APPLICATION

(11) **EP 1 970 409 A1**
(43) Date of publication of application: **17.09.2008**
(21) Application number: 07103909.3
(22) Date of filing: 12.03.2007
(51) Int. Cl.: C08L 33/08, C08L 33/10, C08K 5/09

(54) **Compositions for articles comprising replicated microstructures**

(71) Applicant: GENERAL ELECTRIC COMPANY, Schenectady NY 12345 (US)
(72) Inventor: Olson, Daniel Robert, Vorheesville, NY 12186 (US); Chuck, Timothy Leigh, Canajoharie, NY 13317 (US)
(74) Representative: Carpintero Lopez, Francisco

(57) **Abstract**

The present invention provides novel curable compositions useful in the preparation of light management films and other optical articles. The curable compositions comprise (a) 0.01 to about 1 weight percent of at least one C₁₀-C₄₀ aliphatic acid, (b) at least one a multifunctional (meth)acrylate having structure I; and in certain embodiments (c) at least one monofunctional (meth)acrylate. In one embodiment, the curable compositions comprise at least one silicone-containing surfactant. The curable compositions may be cured to provide the corresponding cured compositions.

## Description

### BACKGROUND

The invention relates to curable (meth)acrylate compositions and, more specifically ultraviolet (UV) radiation curable (meth)acrylate compositions. The compositions are suitable for optical articles and particularly for light management films.

In backlight computer displays or other display systems, optical films are commonly used to direct light. For example, in backlight displays, light management films use prismatic structures (often referred to as microstructure) to direct light along a viewing axis (i.e., an axis substantially normal to the display). Directing the light enhances the brightness of the display viewed by a user and allows the system to consume less power in creating a desired level of on-axis illumination. Films for turning or directing light can also be used in a wide range of other optical designs, such as for projection displays, traffic signals, and illuminated signs. Ultraviolet radiation curable (meth)acrylate compositions find use in applications such as display systems. Films for light management applications are typically prepared by curing a composition in common molds, such as nickel or nickel/cobalt electroforms, into the requisite shape.

UV-curable formulations tend to stick to common molds used for microreplication. This results in poor replication, roughened surfaces, buckling of the coating, and/or catastrophic loss of adhesion to the carrier film and destruction of the mold. There remains a continuing need for further improvement in the materials used to make them, particularly materials that upon curing possess the combined attributes desired to satisfy the increasingly exacting requirements for light management film applications.

### BRIEF DESCRIPTION

In one aspect, the present invention provides a curable composition comprising:
(a) at least one C₁₀-C₄₀ aliphatic acid, wherein said aliphatic acid is present in an amount corresponding to from about 0.01 to about 1 weight percent based upon a total weight of the composition; and
(b) a least one multifunctional (meth)acrylate represented by the structure I 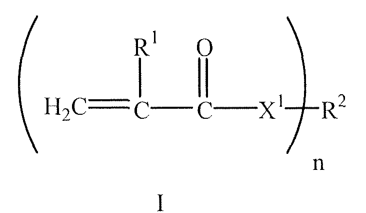
wherein R¹ is hydrogen or methyl; X¹ is O, S, or Se; n is at least 2; and R² is a polyvalent aromatic radical.

In one embodiment, the present invention provides a curable composition comprising:
(a) at least one C₁₀-C₄₀ aliphatic acid, wherein said aliphatic acid is present in an amount corresponding to from about 0.01 to about 1 weight percent based upon a total weight of the composition;
(b) a multifunctional (meth)acrylate represented by the structure I 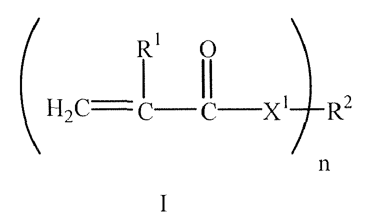 wherein R¹ is hydrogen or methyl; X¹ is O, S, or Se; n is at least 2; and R² is a polyvalent aromatic radical; and
(c) at least one monofunctional (meth)acrylate.

In an alternate embodiment, the present invention provides a curable composition comprising
(a) at least one C₁₀-C₄₀ aliphatic acid, wherein said aliphatic acid is present in an amount corresponding to from about 0.01 to about 1 weight percent based upon a total weight of the composition;
(b) a multifunctional (meth)acrylate represented by the structure I;
(c) at least one monofunctional (meth)acrylate having structure VI 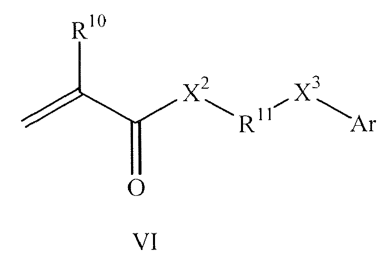 wherein R¹⁰ is hydrogen or methyl; X² and X³ are independently in each instance O, S, or Se; R¹¹ is a divalent C₁-C₂₀ aliphatic radical, a divalent C₃-C₂₀ cycloaliphatic radical, or a divalent C₃-C₂₀ aromatic radical; and Ar is monovalent C₃-C₂₀ aromatic radical; and
(d) at least one silicone-containing surfactant, said at least one silicone-containing surfactant being present in an amount corresponding to from about 0.1 to about 1 weight percent based upon the total weight of the composition.

In yet another embodiment another embodiment, the present invention provides a curable composition comprising
(a) palmitic acid, wherein said palmitic acid is present in an amount corresponding to from about 0.01 to about 1 weight percent based upon a total weight of the composition;
(b) a multifunctional (meth)acrylate represented by the structure IV 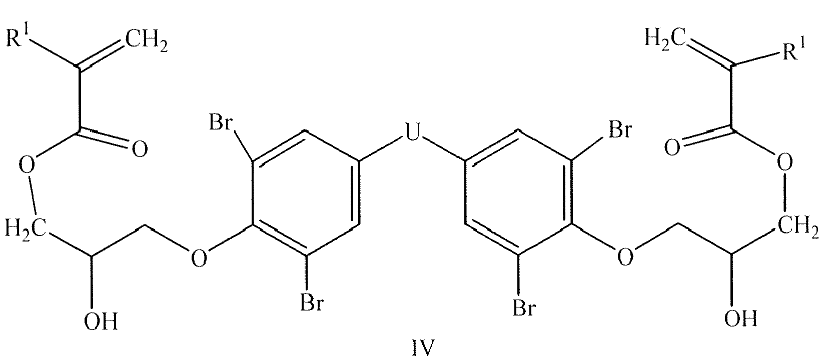 wherein R¹ is hydrogen or methyl, and U is a bond, an oxygen atom, a sulfur atom, a selenium atom, an SO₂ group, an SO group, a CO group, a C₁-C₂₀ aliphatic radical, C₃-C₂₀ cycloaliphatic radical, or a C₃-C₂₀ aromatic radical;
(c) at least one monofunctional (meth)acrylate having structure VI; and
(d) at least one silicone-containing surfactant, said at least one silicone-containing surfactant being present in an amount corresponding to from about 0.1 to about 1 weight percent based upon the total weight of the composition.

In yet another embodiment, the present invention provides a cured composition comprising
(a) at least one C₁₀-C₄₀ aliphatic acid, wherein said aliphatic acid is present in an amount corresponding to from about 0.01 to about 1 weight percent based upon a total weight of the cured composition;
(b) structural units derived from at least one multifunctional (meth)acrylate represented by the structure I; and
(c) structural units derived from at least one monofunctional (meth)acrylate.

In various aspects and embodiments, the invention provides one or more articles comprising the cured compositions of the invention. In certain embodiments, the articles provided by the present invention are useful as light management films.

### DETAILED DESCRIPTION

Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

The present invention may be understood more readily by reference to the following detailed description of preferred embodiments of the invention and the examples included therein. In the following specification and the claims which follow, reference will be made to a number of terms which shall be defined to have the following meanings.

The singular forms "a", "an" and "the" include plural referents unless the context clearly dictates otherwise.

"Optional" or "optionally" means that the subsequently described event or circumstance may or may not occur, and that the description includes instances where the event occurs and instances where it does not.

As used herein, the term "aromatic radical" refers to an array of atoms having a valence of at least one comprising at least one aromatic group. The array of atoms having a valence of at least one comprising at least one aromatic group may include heteroatoms such as nitrogen, sulfur, selenium, silicon and oxygen, or may be composed exclusively of carbon and hydrogen. As used herein, the term "aromatic radical" includes but is not limited to phenyl, pyridyl, furanyl, thienyl, naphthyl, phenylene, and biphenyl radicals. As noted, the aromatic radical contains at least one aromatic group. The aromatic group is invariably a cyclic structure having 4n+2 "delocalized" electrons where "n" is an integer equal to 1 or greater, as illustrated by phenyl groups (n = 1), thienyl groups (n = 1), furanyl groups (n = 1), naphthyl groups (n = 2), azulenyl groups (n = 2), anthraceneyl groups (n = 3) and the like. The aromatic radical may also include nonaromatic components. For example, a benzyl group is an aromatic radical which comprises a phenyl ring (the aromatic group) and a methylene group (the nonaromatic component). Similarly a tetrahydronaphthyl radical is an aromatic radical comprising an aromatic group (C₆H₃) fused to a nonaromatic component -(CH₂)₄-. For convenience, the term "aromatic radical" is defined herein to encompass a wide range of functional groups such as alkyl groups, alkenyl groups, alkynyl groups, haloalkyl groups, haloaromatic groups, conjugated dienyl groups, alcohol groups, ether groups, aldehydes groups, ketone groups, carboxylic acid groups, acyl groups (for example carboxylic acid derivatives such as esters and amides), amine groups, nitro groups, and the like. For example, the 4-methylphenyl radical is a C₇ aromatic radical comprising a methyl group, the methyl group being a functional group which is an alkyl group. Similarly, the 2-nitrophenyl group is a C₆ aromatic radical comprising a nitro group, the nitro group being a functional group. Aromatic radicals include halogenated aromatic radicals such as 4-trifluoromethylphenyl, hexafluoroisopropylidenebis(4-phen-1-yloxy) (i.e., - OPhC(CF₃)₂PhO-), 4-chloromethylphen-1-yl, 3-trifluorovinyl-2-thienyl, 3-trichloromethylphen-1-yl (i.e., 3-CCl₃Ph-), 4-(3-bromoprop-1-yl)phen-1-yl (i.e., 4-BrCH₂CH₂CH₂Ph-), and the like. Further examples of aromatic radicals include 4-allyloxyphen-1-oxy, 4-aminophen-1-yl (i.e., 4-H₂NPh-), 3-aminocarbonylphen-1-yl (i.e., NH₂COPh-), 4-benzoylphen-1-yl, dicyanomethylidenebis(4-phen-1-yloxy) (i.e., -OPhC(CN)₂PhO-), 3-methylphen-1-yl, methylenebis(4-phen-1-yloxy) (i.e., - OPhCH₂PhO-), 2-ethylphen-1-yl, phenylethenyl, 3-formyl-2-thienyl, 2-hexyl-5-furanyl, hexamethylene-1,6-bis(4-phen-1-yloxy) (i.e., -OPh(CH₂)₆PhO-), 4-hydroxymethylphen-1-yl (i.e., 4-HOCH₂Ph-), 4-mercaptomethylphen-1-yl (i.e., 4-HSCH₂Ph-), 4-methylthiophen-1-yl (i.e., 4-CH₃SPh-), 3-methoxyphen-1-yl, 2-methoxycarbonylphen-1-yloxy (e.g., methyl salicyl), 2-nitromethylphen-1-yl (i.e., 2-NO₂CH₂Ph), 3-trimethylsilylphen-1-yl, 4-t-butyldimethylsilylphenl-1-yl, 4-vinylphen-1-yl, vinylidenebis(phenyl), and the like. The term "a C₃ - C₁₀ aromatic radical" includes aromatic radicals containing at least three but no more than 10 carbon atoms.

The aromatic radical 1-imidazolyl (C₃H₂N₂-) represents a C₃ aromatic radical. The benzyl radical (C₇H₇-) represents a C₇ aromatic radical.

As used herein the term "cycloaliphatic radical" refers to a radical having a valence of at least one, and comprising an array of atoms which is cyclic but which is not aromatic. As defined herein a "cycloaliphatic radical" does not contain an aromatic group. A "cycloaliphatic radical" may comprise one or more noncyclic components. For example, a cyclohexylmethyl group (C₆H₁₁CH₂-) is an cycloaliphatic radical which comprises a cyclohexyl ring (the array of atoms which is cyclic but which is not aromatic) and a methylene group (the noncyclic component). The cycloaliphatic radical may include heteroatoms such as nitrogen, sulfur, selenium, silicon and oxygen, or may be composed exclusively of carbon and hydrogen. For convenience, the term "cycloaliphatic radical" is defined herein to encompass a wide range of functional groups such as alkyl groups, alkenyl groups, alkynyl groups, haloalkyl groups, conjugated dienyl groups, alcohol groups, ether groups, aldehyde groups, ketone groups, carboxylic acid groups, acyl groups (for example carboxylic acid derivatives such as esters and amides), amine groups, nitro groups, and the like. For example, the 4-methylcyclopent-1-yl radical is a C₆ cycloaliphatic radical comprising a methyl group, the methyl group being a functional group which is an alkyl group. Similarly, the 2-nitrocyclobut-1-yl radical is a C₄ cycloaliphatic radical comprising a nitro group, the nitro group being a functional group. A cycloaliphatic radical may comprise one or more halogen atoms which may be the same or different. Halogen atoms include, for example; fluorine, chlorine, bromine, and iodine. Cycloaliphatic radicals comprising one or more halogen atoms include 2-trifluoromethyleyclohex-1-yl, 4-bromodifluoromethylcyclooet-1-yl, 2-chlorodifluoromethylcyclohex-1-yl, hexafluoroisopropylidene-2,2-bis (cyclohex-4-yl) (i.e., -C₆-H₁₀C(CF₃)₂ C₆H₁₀-), 2-chloromethylcyelohex-1-yl, 3- difluoromethylenecyclohex-1-yl, 4-trichloromethylcyclohex-1-yloxy, 4-bromodichloromethylcyelohex-1-ylthio, 2-bromoethylcyclopent-1-yl, 2-bromopropylcyclohex-1-yloxy (e.g., CH₃CHBrCH₂C₆H₁₀O-), and the like. Further examples of cycloaliphatic radicals include 4-allyloxycyclohex-1-yl, 4-aminocyclohex-1-yl (i.e., H₂NC₆H₁₀-), 4-aminocarbonylcyclopent-1-yl (i.e., NH₂COC₅H₈-), 4-acetyloxycyclohex-1-yl, 2,2-dicyanoisopropylidenebis(cyclohex-4-yloxy) (i.e., -OC₆H₁₀C(CN)₂C₆H₁₀O-), 3-methylcyclohex-1-yl, methylenebis(cyclohex-4-yloxy) (i.e., -OC₆H₁₀CH₂C₆H₁₀O-), 1-ethylcyclobut-1-yl, cyclopropylethenyl, 3-formyl-2-terahydrofuranyl, 2-hexyl-5-tetrahydrofuranyl, hexamethylene-1,6-bis(cyclohex-4-yloxy) (i.e., -O C₆H₁₀(CH₂)₆C₆H₁₀O-), 4-hydroxymethylcyclohex-1-yl (i.e., 4-HOCH₂C₆H₁₀-), 4-mercaptomethylcyclohex-1-yl (i.e., 4-HSCH₂C₆H₁₀-), 4-methylthiocyclohex-1-yl (i.e., 4-CH₃SC₆H₁₀-), 4-methoxycyclohex-1-yl, 2-methoxycarbonylcyclohex-1-yloxy (2-CH₃OCOC₆H₁₀O-), 4-nitromethylcyclohex-1-yl (i.e., NO₂CH₂C₆H₁₀-), 3-trimethylsilylcyclohex-1-yl, 2-t-butyldimethylsilylcyclopent-1-yl, 4-trimethoxysilylethylcyclohex-1-yl (e.g., (CH₃O)₃SiCH₂CH₂C₆H₁₀-), 4-vinylcyclohexen-1-yl, vinylidenebis(cyclohexyl), and the like. The term "a C₃ - C₁₀ cycloaliphatic radical" includes cycloaliphatic radicals containing at least three but no more than 10 carbon atoms. The cycloaliphatic radical 2-tetrahydrofuranyl (C₄H₇O-) represents a C₄ cycloaliphatic radical. The cyclohexylmethyl radical (C₆H₁₁CH₂-) represents a C₇ cycloaliphatic radical.

As used herein the term "aliphatic radical" refers to an organic radical having a valence of at least one consisting of a linear or branched array of atoms which is not cyclic. Aliphatic radicals are defined to comprise at least one carbon atom. The array of atoms comprising the aliphatic radical may include heteroatoms such as nitrogen, sulfur, silicon, selenium and oxygen or may be composed exclusively of carbon and hydrogen. For convenience, the term "aliphatic radical" is defined herein to encompass, as part of the "linear or branched array of atoms which is not cyclic" a wide range of functional groups such as alkyl groups, alkenyl groups, alkynyl groups, haloalkyl groups , conjugated dienyl groups, alcohol groups, ether groups, aldehyde groups, ketone groups, carboxylic acid groups, acyl groups (for example carboxylic acid derivatives such as esters and amides), amine groups, nitro groups, and the like. For example, the 4-methylpent-1-yl radical is a C₆ aliphatic radical comprising a methyl group, the methyl group being a functional group which is an alkyl group. Similarly, the 4-nitrobut-1-yl group is a C₄ aliphatic radical comprising a nitro group, the nitro group being a functional group. An aliphatic radical may be a haloalkyl group which comprises one or more halogen atoms which may be the same or different. Halogen atoms include, for example; fluorine, chlorine, bromine, and iodine. Aliphatic radicals comprising one or more halogen atoms include the alkyl halides trifluoromethyl, bromodifluoromethyl, chlorodifluoromethyl, hexafluoroisopropylidene, chloromethyl, difluorovinylidene, trichloromethyl, bromodichloromethyl, bromoethyl, 2-bromotrimethylene (e.g., -CH₂CHBrCH₂-), and the like. Further examples of aliphatic radicals include allyl, aminocarbonyl (i.e., - CONH₂), carbonyl, 2,2-dicyanoisopropylidene (i.e., -CH₂C(CN)₂CH₂-), methyl (i.e., - CH₃), methylene (i.e., -CH₂-), ethyl, ethylene, formyl (i.e.,-CHO), hexyl, hexamethylene, hydroxymethyl (i.e.,-CH₂OH), mercaptomethyl (i.e., -CH₂SH), methylthio (i.e., -SCH₃), methylthiomethyl (i.e., -CH₂SCH₃), methoxy, methoxycarbonyl (i.e., CH₃OCO-), nitromethyl (i.e., -CH₂NO₂), thiocarbonyl, trimethylsilyl ( i.e., (CH₃)₃Si-), t-butyldimethylsilyl, 3-trimethyoxysilypropyl (i.e., (CH₃O)₃SiCH₂CH₂CH₂-), vinyl, vinylidene, and the like. By way of further example, a C₁- C₁₀ aliphatic radical contains at least one but no more than 10 carbon atoms. A methyl group (i.e., CH₃-) is an example of a C₁ aliphatic radical. A decyl group (i.e., CH₃(CH₂)₉-) is an example of a C₁₀ aliphatic radical.

In one aspect, the curable composition is a solvent-free, high refractive index, radiation curable composition that provides a cured material having an excellent balance of properties. The compositions are ideally suited for light management film applications. In one aspect, light management films prepared from the curable compositions exhibit good brightness.

As noted, in one embodiment, the present invention provides a curable composition comprising (a) at least one C₁₀-C₄₀ aliphatic acid, wherein said aliphatic acid is present in an amount corresponding to from about 0.01 to about 1 weight percent based upon a total weight of the composition; and (b) a multifunctional (meth)acrylate represented by the structure I 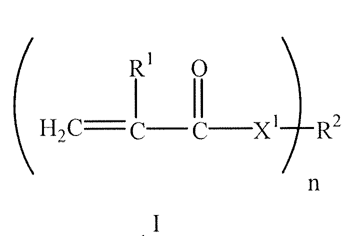 wherein R¹ is hydrogen or methyl; X¹ is O, S, or Se; n is at least 2; and R² is a polyvalent aromatic radical.

Thus, in one aspect, the curable composition provided by the present invention does not require the presence of a monofunctional (meth)acrylate in order to provide a useful curable composition, for example a composition which can be used in the preparation of a light management film. In embodiments in which a monofunctional (meth)acrylate is not required, the curable composition may comprise one or more multifunctional (meth)acrylates. In one embodiment, the curable composition comprises at least one multifunctional (meth)acrylate selected from the group consisting of aliphatic diol (meth)acrylates, cycloaliphatic diol (meth)acrylates, and aromatic diol (meth)acrylates. Aliphatic diol (meth)acrylates are multifunctional (meth)acrylates which may be prepared, for example, by reaction of an aliphatic diol such as 1,6-hexanediol with (meth)acryloyl chloride. Cycloaliphatic diol (meth)acrylates are defined analogously and may be prepared in via methods known to those skilled in the art from the corresponding aliphatic diol and (meth)acryloyl chloride. Aromatic diol (meth)acrylates are likewise known to those skilled in the art to be available by reaction of the corresponding aromatic diol with (meth)acryloyl chloride and by other methods. Various mixtures of multifunctional (meth)acrylates may employed to provide useful curable compositions that may be used in the preparation of cured articles such as light management films. In the disclosure which follows, a wide variety of multifunctional (meth)acrylates are described as suitable for use in the curable compositions of the present invention. Such multifunctional (meth)acrylates are also useful in the preparation of curable compositions which do not comprise a monofunctional (meth)acrylate. Although much of the disclosure which follows is directed to curable compositions comprising at least one monofunctional (meth)acrylate, as will be recognized by those skilled in the art, various aspects of the disclosed structures, compositions, and principles apply equally in a number of embodiments to curable compositions not requiring the presence of a monofunctional (meth)acrylate. Thus, for example, in one embodiment the present invention provides a curable composition comprising (a) at least one C₁₀-C₄₀ aliphatic acid, wherein said aliphatic acid is present in an amount corresponding to from about 0.01 to about 1 weight percent based upon a total weight of the composition; and (b) at least one multifunctional (meth)acrylate represented by the structure I wherein R² is a polyvalent aromatic radical having structure III. In yet another embodiment, the present invention provides a curable composition comprising (a) at least one C₁₀-C₄₀ aliphatic acid, wherein said aliphatic acid is present in an amount corresponding to from about 0.01 to about 1 weight percent based upon a total weight of the composition; and (b) at least one multifunctional (meth)acrylate represented by the structure IV. In yet another embodiment, the present invention provides a curable composition comprising (a) at least one C₁₀-C₄₀ aliphatic acid, wherein said aliphatic acid is present in an amount corresponding to from about 0.01 to about 1 weight percent based upon a total weight of the composition; and (b) at least one multifunctional (meth)acrylate prepared by the ring opening reaction of tetrabromobisphenol A diglycidyl ether with (meth)acrylic acid. In still yet another embodiment, the present invention provides a cured composition comprising: (a) at least one C₁₀-C₄₀ aliphatic acid, wherein said aliphatic acid is present in an amount corresponding to from about 0.01 to about 1 weight percent based upon a total weight of the composition; and (b) structural units derived from at least one multifunctional (meth)acrylate having structure I.

As noted, in one embodiment, the present invention provides a curable composition comprising (a) at least one C₁₀-C₄₀ aliphatic acid, wherein said aliphatic acid is present in an amount corresponding to from about 0.01 to about 1 weight percent based upon a total weight of the composition; (b) a multifunctional (meth)acrylate represented by the structure I; and (c) at least one monofunctional (meth)acrylate.

Typically, the curable compositions of the present invention are liquids at room temperature. In one embodiment, the curable composition of the present invention is a low melting solid (i.e. the composition has a melting point of less than about 50°C).

In yet another embodiment, the curable composition of the present invention has a melting point of less than about 100°C. In an alternate embodiment, the curable composition of the present invention is an amorphous solid having a softening point of less than about 50°C.

The compositions of the present invention are "curable" in the sense that the composition comprises as monomeric species, at least one multifunctional (meth)acrylate and at least one monofunctional (meth)acrylate, which when subjected to curing conditions afford a cured, polymeric composition. Various curing conditions may be employed to convert the curable compositions of the present invention into the corresponding cured compositions. In one embodiment, the composition is "curable" in the sense that it may converted into a cured, polymeric composition upon exposure to ultraviolet (UV) radiation. The curable compositions of the present invention in certain embodiments comprise a photo-active polymerization initiator. Alternatively, the curable compositions of the present invention may comprise a polymerization initiator which may be activated thermally, for example 2,2'-bisazobisiosbutyronitrile (AIBN, CAS No. 78-67-1), 1,1'-azobis(cyclohexanecarbonitrile), 4,4'azobis(4-cyanovaleric acid), 2,2'azobis(2-methylproionamidine) dihydrochloride (CAS No. 2997-92-4), azo-tert-butane, and the like. In one embodiment, the presence of a polymerization initiator is not required and the curable composition may be polymerized by simply heating.

In one embodiment, the curable composition of the present invention comprises a peroxide polymerization initiator. Such peroxy-based initiators that may be used to promote polymerization of the curable composition by thermal activation. Suitable peroxide polymerization initiators include, for example, dibenzoyl peroxide, dicumyl peroxide, methyl ethyl ketone peroxide, lauryl peroxide, cyclohexanone peroxide, t-butyl hydroperoxide, t-butyl benzene hydroperoxide, t-butyl peroctoate, 2,5-dimethylhexane-2,5-dihydroperoxide, 2,5-dimethyl-2,5-di(t-butylperoxy)-hex-3-yne, di-t-butylperoxide, t-butylcumyl peroxide, alpha, alpha'-bis(t-butylperoxy-m-isopropyl)benzene, 2,5-dimethyl-2,5-di(t-butylperoxy)hexane, dicumylperoxide, di(t-butylperoxy isophthalate, t-butylperoxybenzoate, 2,2-bis(t-butylperoxy)butane, 2,2-bis(t-butylperoxy)octane, 2,5-dimethyl-2,5-di(benzoylperoxy)hexane, di(trimethylsilyl)peroxide, trimethylsilylphenyltriphenylsilyl peroxide, and the like, and combinations comprising at least one of the foregoing polymerization initiators.

In one embodiment, the curable composition of the present invention comprises a photoinitiator which serves to promote the on-demand polymerization (curing) of the (meth)acrylate components of the curable composition. Suitable polymerization initiators include photoinitiators that promote polymerization of the components upon exposure to ultraviolet radiation. Particularly suitable photoinitiators include phosphine oxide photoinitiators. Examples of such photoinitiators include the IRGACURE® and DAROCUR™ series of phosphine oxide photoinitiators available from CIBA SPECIALTY CHEMICALS; the LUCIRIN® series of photoinitiators available from BASF Corp.; and the ESACURE® series of photoinitiators. Other useful photoinitiators include ketone-based photoinitiators, such as hydroxy- and alkoxyalkyl phenyl ketones, and thioalkylphenyl morpholinoalkyl ketones. Also suitable are benzoin ether photoinitiators.

The requirement that the curable composition comprise "at least one" C₁₀-C₄₀ aliphatic acid means that one or more C₁₀-C₄₀ aliphatic acids are present in the composition. As is demonstrated herein, the C₁₀-C₄₀ aliphatic acid component of the curable composition prevents fouling of surfaces in contact with the composition during polymerization (curing). Thus, for instance, during the preparation of a light management film, such as a brightness enhancement film, comprising surface microstructures the curable composition is contacted with an electroform (also referred to as a "master", a "shim" or a "cast roll") comprising surface features which will be replicated in the brightness enhancement film. In order to replicate the microstructures of the electroform in the film, the curable composition is polymerized (cured) while in contact with the electroform. After polymerization of the curable composition, the cured composition comprising the microstructures replicated from the microstructures on the surface of the electroform is disengaged from (peeled from) the electroform. Typically, the cured composition is in the form of a film. As successive microstructure-containing film samples are prepared and peeled from the electroform, fouling of the electroform may occur. It has been discovered that the presence of at least one aliphatic acid in the curable composition is surprisingly effective at preventing fouling of the electroform, and as a result, the electroform may be used to prepare a greater number of film samples than could be prepared using a curable composition lacking an aliphatic acid component.

In one embodiment, the C₁₀-C₄₀ aliphatic acid component is present in an amount corresponding to from about 0.01 weight percent to about 1 weight percent based upon a total weight of the composition. In an alternate embodiment, the C₁₀-C₄₀ aliphatic acid component is present in an amount corresponding to from about 0.05 weight percent to about 0.5 weight percent based upon a total weight of the composition. In yet another embodiment, the C₁₀-C₄₀ aliphatic acid component is present in an amount corresponding to from about 0.1 weight percent to about 0.4 weight percent based upon a total weight of the composition.

In one embodiment, the C₁₀-C₄₀ aliphatic acid component comprises a carboxylic acid having structure II 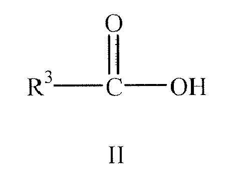 wherein R³ is a C₉-C₃₉ aliphatic radical. Suitable aliphatic acid components include, but are not limited to, naturally occurring and synthetic fatty acids such as palmitic acid, stearic acid, and myristic acid. In one embodiment, the aliphatic acid component comprises at least one fatty acid selected from the group consisting of myristic acid, palmitic acid, stearic acid, oleic acid, linoleic acid, linolenic acid, and eicosanoic acid. In an alternate embodiment, the aliphatic acid component comprises a synthetic C₁₀-C₄₀ aliphatic acid which is not a fatty acid, for example alpha-hexadecyloxy acetic acid, alpha-hexadecylthio acetic acid, alpha-octadecyloxy acetic acid, and the like. In certain embodiments, it has been found to be advantageous that the C₁₀-C₄₀ aliphatic acid component be soluble in the curable composition.

As noted, the curable composition of the present invention comprises at least one a multifunctional (meth)acrylate represented by the structure I. 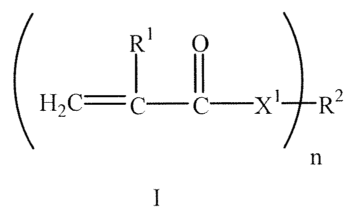 wherein R¹ is hydrogen or methyl; X¹ is O, S, or Se; n is at least 2; and R² is a polyvalent aromatic radical. The term "multifunctional (meth)acrylate" means a composition comprising at least to (meth)acryloyl groups, a (meth)acryloyl group having the structure 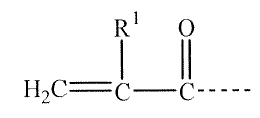 wherein R¹ is hydrogen or methyl and the dashed line (----) signals the point of attachment of the (meth)acryloyl group to the multifunctional (meth)acrylate.

As noted, the group R² is a polyvalent aromatic radical. By "polyvalent aromatic radical" it is meant that R² possesses at least two points of attachment (valences) to which (meth)acryloyl groups may be attached. In one embodiment, R² is a divalent aromatic radical to which may be attached two (meth)acryloyl groups. In an alternate embodiment, R² is a trivalent aromatic radical to which may be attached three (meth)acryloyl groups. R² is an aromatic radical within the definition of the term "aromatic radical" given herein. As such, the group R² comprises at least one aromatic ring.

In one embodiment, R² is a divalent aromatic radical having structure III 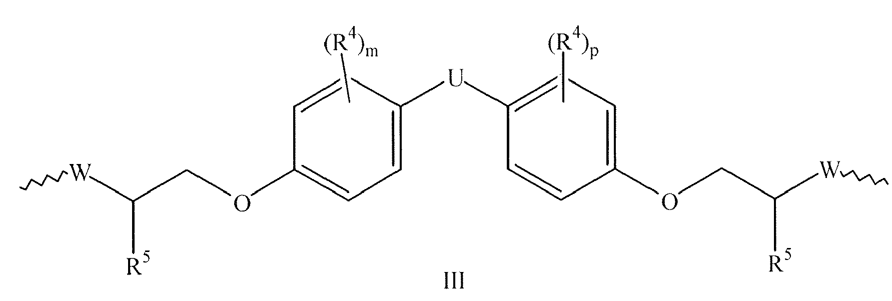 wherein and U is a bond, an oxygen atom, a sulfur atom, a selenium atom, an SO₂ group, an SO group, a CO group, a C₁-C₂₀ aliphatic radical, C₃-C₂₀ cycloaliphatic radical, or a C₃-C₂₀ aromatic radical; R⁴ is independently at each occurrence a halogen atom, a nitro group, a cyano group, an amino group, a hydroxy group, a C₁-C₂₀ aliphatic radical, a C₃-C₂₀ cycloaliphatic radical, or a C₃-C₂₀ aromatic radical; R⁵ is independently at each occurrence a hydrogen atom, a hydroxy group, a thiol group, or an amino group; W is a bond, a divalent C₁-C₂₀ aliphatic radical, a divalent C₃-C₂₀ cycloaliphatic radical, a divalent C₃-C₂₀ aromatic radical; and "m" and "p" are independently integers ranging from 0 to 4.

Suitable aromatic radicals represented by structure III are illustrated by Examples I-1, I-2, I-3, I-4, and I-5, in Table 1, in which the group R² falls within the genus encompassed by structure III. For instance, in Example I-1 of Table 1, R² represents structure III wherein the group U is an isopropylidene group ((CH₃)₂C), the groups R⁴ represent bromine atoms, the values of "m" and "p" are each 2, the 4 bromine atoms are located at the 2, 2', 6, and 6' positions of a bisphenol A residue, R⁵ is hydroxy (OH), and "W" represents a methylene (CH₂) group. To further illustrate the relationship between structures I and III, attention is called to Example I-1 of Table 1 wherein each of the terminal methylene groups (----CH₂ or CH₂ ----) shown in the structure under the heading "R²" (the structure which illustrates generic formula III) serves as the point of attachment for the (meth)acryloyloxy groups 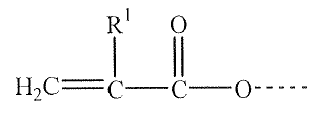 present in the di(meth)acrylate composition represented by structure I wherein R¹ is methyl (Me), X¹ is oxygen (O) "n" = 2.

**TABLE 1 MULTIFUNCTIONAL (METH)ACRYLATES HAVING STRUCTURE I**

| Example | R¹ | X¹ | n | R² |
|---|---|---|---|---|
| I-1 | Me | O | 2 | 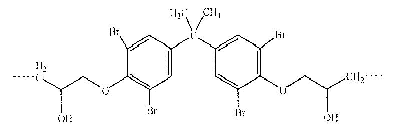 |
| I-2 | H | O | 2 | 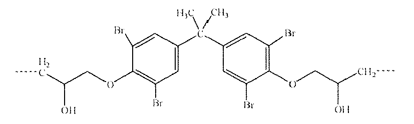 |
| I-3 | H | O | 2 | 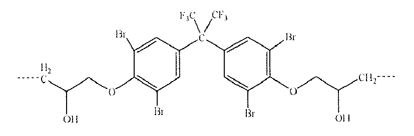 |
| I-4 | H | O | 2 | 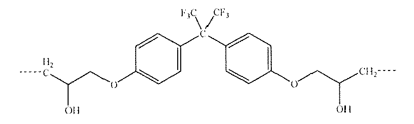 |
| I-5 | M | O | 2 | 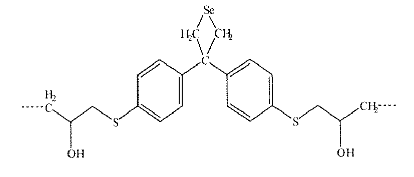 |
| I-6 | Me | O | 2 | 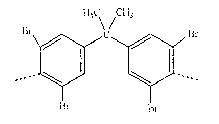 |
| I-7 | Me | S | 2 | 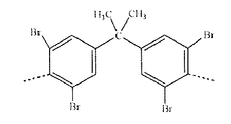 |
| I-8 | Me | O | 3 | 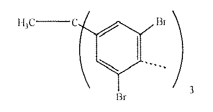 |
| I-9 | Me | s | 2 | 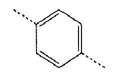 |
| I-10 | Me | s | 2 | 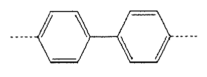 |

In one embodiment, the multifunctional (meth)acrylate comprises at least one di(meth)acrylate having structure IV 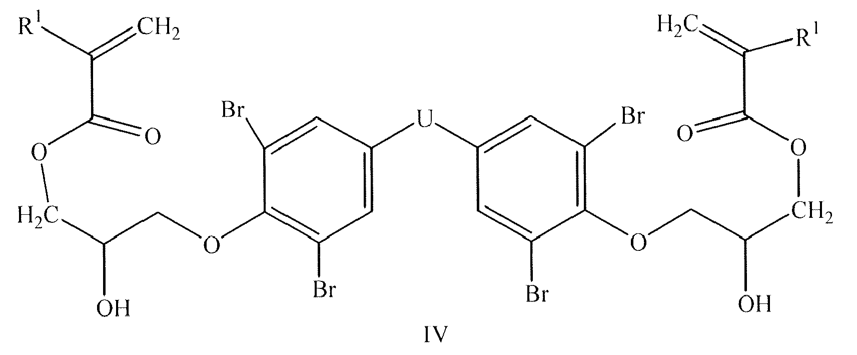 wherein R¹ is hydrogen or methyl, and U is a bond, an oxygen atom, a sulfur atom, a selenium atom, an SO₂ group, an SO group, a CO group, a C₁-C₂₀ aliphatic radical, C₃-C₂₀ cycloaliphatic radical, or a C₃-C₂₀ aromatic radical.

Brominated di(meth)acrylates falling within the genus represented by structure IV are illustrated by Examples I-1, I-2, and I-3 of Table 1.

As will be appreciated by those skilled in the art, multifunctional (meth)acrylates may be prepared by nucleophilic ring opening of a polyglycidyl ether such as tetrabromobisphenol A diglycidyl ether with acrylic acid or (meth)acrylic acid, and by other methods known to those skilled in the art such as esterification of the hydroxyl groups with (meth)acryloyl chloride of a dihydroxy compound comprising the aromatic radical R². Suitable polyglycidyl ethers which can serve as precursors to the corresponding multifunctional (meth)acrylate represented by the structure I include bisphenol A diglycidyl ether, bisphenol-F diglycidyl ether, tetrabromo bisphenol-F diglycidyl ether, resorcinol diglycidyl ether, hydroquinone diglycidyl ether, tetrabromocatechol diglycidyl ether; 3',3", 5',5"-tetrabromophenolphthalein (CAS No. 1301-20-8) diglycidyl ether; 4,4'-biphenol diglycidyl ether; 1,3,5-trihydroxybenzene triglycidyl ether; 1,1,1-tris(4-hydroxyphenyl)ethane triglycidyl ether, and the like.

Multifunctional (meth)acrylates represented by the structure I are also available commercially. For example, a suitable multifunctional (meth)acrylate derived from tetrabrominated bisphenol A diglycidyl ether is RDX 51027 available from UCB CHEMICALS. Other commercially available multifunctional acrylates include EB600, EB3600, EB3605, EB3700, EB3701, EB3702, EB3703, and EB3720, all available from UCB CHEMICALS, and CN104 and CN120 available from SARTOMER.

In one embodiment, the curable composition of the present invention comprises at least one silicone-containing surfactant. Silicone-containing surfactants are illustrated by polyalkyleneoxide modified polydimethyl siloxanes. In certain instances the curable compositions of the present invention exhibit exceptional mold release properties upon curing, the exceptional mold release properties being due in part to the presence of the silicone-containing surfactant in addition to the at least one C₁₀-C₄₀ aliphatic acid. The preparation of polyalkyleneoxide modified polydimethyl siloxanes is well known in the art. Polyalkyleneoxide modified polydimethyl siloxanes of the present invention can be prepared according to the procedure set forth in U.S. Pat. No. 3,299,112. Silicone-containing surfactants are described in more detail in Kirk Othmer's Encyclopedia of Chemical Technology, 4th Ed., Vol. 22, pp. 82-142, "Surfactants and Detersive Systems." Further suitable nonionic detergent surfactants are generally disclosed in U.S. Pat. No. 3,929,678, Laughlin et al., issued Dec. 30, 1975, at column 13, line 14 through column 16, line 6.

In one embodiment, the curable composition comprises a silicone-containing surfactant, said surfactant comprising a polyalkyleneoxide modified polydimethylsiloxane having structure V 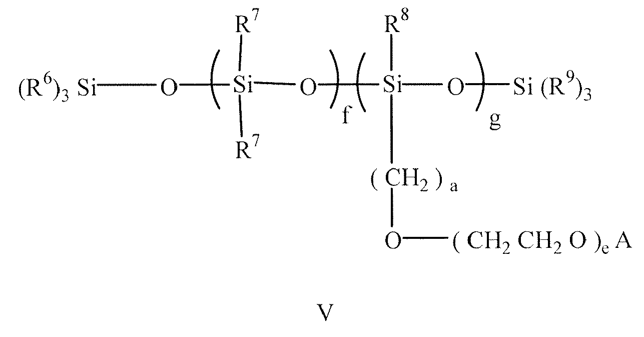 wherein R⁶, R⁷, R⁸, and R⁹ are independently at each occurrence a C₁-C₂₀ aliphatic radical; A is a hydrogen or a C₁-C₂₀ monovalent aliphatic radical; "a" and "e" are independently numbers ranging from 1 to 20; and "f" and "g" are independently numbers ranging from 1 to 50.

Silicone-containing surfactants are widely available commercially and typically comprise compositions comprising hydrophilic polyether substructures and hydrophobic silicon-containing substructures. SILWET 7602 and SIL WET 720 are preferred silicone-containing surfactants and are available from OSi Specialty Chemicals, Ltd. Other suitable silicone-containing surfactants are illustrated by, but are not limited to SILWET L-7608, SILWET L-7607, SILWET L-77, SILWET L-7605, SILWET L-7604, SILWET L-7600, SILWET L-7657 and combinations thereof.

In one embodiment, the curable composition comprises a silicone-containing surfactant, wherein said surfactant comprises a polyalkyleneoxy group having a molecular weight is less than or equal to about 10,000 grams per mole (g/mol). In an alternate embodiment of the present invention, the molecular weight of the polyalkyleneoxy group is less than or equal to about 8,000 g/mol. In yet another embodiment the molecular weight of the polyalkyleneoxy group ranges from about 300 to about 5,000 g/mol.

Other silicone-containing surfactants are available from BYK-CHEMIE (for example, BYK-300 and BYK-301), DOW CORNING (for example, ADDITIVE 11 AND ADDITIVE 57), and EFKA (for example, EFKA 3236, EFKA 3239, EFKA 3299 and EFKA 3232).

In curable compositions comprising a silicone-containing surfactant, the silicone-containing surfactant is typically present in an amount corresponding to from about 0.01 to about 5 weight percent based upon the total weight of the curable composition. In one embodiment, the silicone-containing surfactant is present in an amount corresponding to from about 0.1 to about 1 weight percent based upon the total weight of the curable composition. In an alternate embodiment of the present invention, the silicone-containing surfactant is present in an amount corresponding to from about 0.1 to about 0.5 weight percent based upon the total weight of the curable composition.

Typically, the multifunctional (meth)acrylate is present in the curable composition in an amount corresponding to from about 30 to about 80 weight percent of the total weight of the composition. In one embodiment, an amount of multifunctional (meth)acrylate greater than or equal to about 35 weight percent may be present in the curable composition. In yet another embodiment an amount of multifunctional (meth)acrylate greater than or equal to about 45 weight percent may be present in the curable composition. In still yet another embodiment, an amount of multifunctional (meth)acrylate greater than or equal to about 50 weight percent may be present in the curable composition. In one embodiment, an amount of multifunctional (meth)acrylate corresponding to less than or equal to about 75 weight percent may be may be present in the curable composition. In yet another embodiment, an amount of multifunctional (meth)acrylate corresponding to less than or equal to about 70 weight percent may be may be present in the curable composition. In still yet another embodiment, an amount of multifunctional (meth)acrylate corresponding to less than or equal to about 65 weight percent may be may be present in the curable composition.

Typically, monofunctional (meth)acrylate is present in the curable composition in an amount corresponding to from about 20 to about 70 weight percent of the total weight of the composition.. Within this range, it may be preferred to use an amount of greater than or equal to about 20 weight percent, and in certain embodiments more preferably greater than or equal to about 30 weight percent.

In one embodiment, the present invention provides a curable composition wherein said multifunctional (meth)acrylate I is present in an amount corresponding to from about 30 to about 80 weight percent of the total weight of the composition, and said monofunctional (meth)acrylate is present in an amount corresponding to from about 20 to about 70 weight percent of the total weight of the composition.

In one embodiment, the present invention provides a curable composition comprising at least one monofunctional (meth)acrylate selected from the group consisting of methyl acrylate, methyl (meth)acrylate, and arylether (meth)acrylate monomers having structure VI 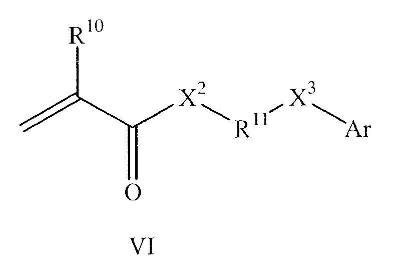 wherein R¹⁰ is hydrogen or methyl; X² and X³ are independently in each instance O, S, or Se; R¹¹ is a divalent C₁-C₂₀ aliphatic radical, a divalent C₃-C₂₀ cycloaliphatic radical, or a divalent C₃-C₂₀ aromatic radical; and Ar is monovalent C₃-C₂₀ aromatic radical.

In an alternate embodiment, the present invention provides a curable composition comprising at least one monofunctional (meth)acrylate having structure VI.

Suitable monofunctional (meth)acrylates having structure VI are illustrated by, but are not limited to, the specific examples provided in Table 2 below.

**TABLE 2 MONOFUNCTIONAL (METH)ACRYLATES HAVING STRUCTURE VI**

| Example | R¹⁰ | X² | R¹¹ | X³ | Ar |
|---|---|---|---|---|---|
| II-1 | Me | O | ----(CH₂ CH₂)---- | O | 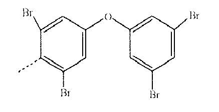 |
| II-2 | H | O | ----(CH₂ CH₂)---- | S | 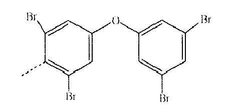 |
| II-3 | H | o | ----(CH₂ CH₂)---- | S | 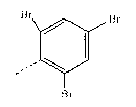 |
| II-4 | H | O | ----(CH₂ CH₂)---- | Se | 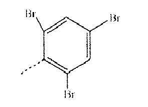 |
| II-5 | Me | O | ----(CH₂CH₂CH₂)---- | Se | 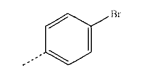 |
| II-6 | Me | S | ----(CH₂CH₂CH₂)---- | Se | 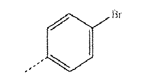 |
| II-7 | Me | S | ----(CH₂CH₂CH₂)---- | S | 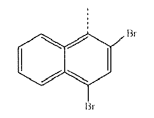 |
| II-8 | Me | O | ----(CH₂CH₂CH₂)---- | S | 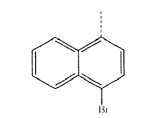 |
| II-9 | Me | O | ----(CH₂CH₂CH₂)---- | S | 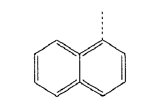 |
| II-10 | Me | O | ----(CH₂CH₂CH₂)---- | S | 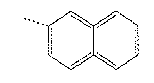 |

In one embodiment, the present invention provides a curable composition comprising at least one monofunctional (meth)acrylate which is a phenylthioethyl (meth)acrylate having structure VII 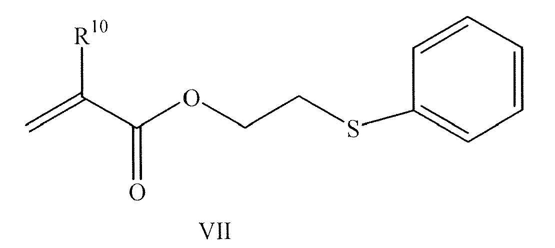 wherein R¹⁰ is hydrogen or methyl.

In an alternate embodiment, the present invention provides a curable composition comprising at least one monofunctional (meth)acrylate which is a naphthylthioethyl (meth)acrylate VIII 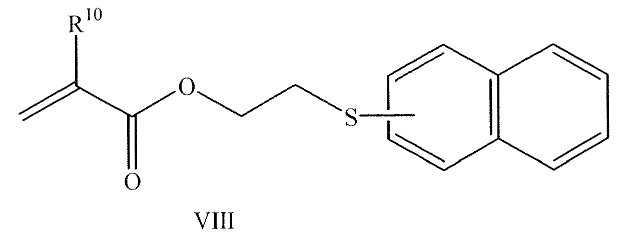 wherein R¹⁰ is hydrogen or methyl.

In addition to providing curable compositions, the present invention also provides cured compositions prepared from the curable compositions and articles comprising the cured compositions. Any of the curable compositions disclosed herein may be converted into the corresponding cured composition by polymerizing the multifunctional (meth)acrylate and monofunctional (meth)acrylate components of the curable composition. Those skilled in the art will appreciate that the multifunctional (meth)acrylate and monofunctional (meth)acrylate components of the curable composition will be consumed as the curable composition is cured to give the cured composition. Those skilled in the art will further appreciate that the multifunctional (meth)acrylate and monofunctional (meth)acrylate components of the curable composition will be converted into structural units derived from the multifunctional (meth)acrylate components and structural units derived from the monofunctional (meth)acrylate components. For example, a curable composition comprising as the monofunctional (meth)acrylate a phenylthioethyl (meth)acrylate having structure VII will, upon curing, comprise structural units derived from the phenylthioethyl (meth)acrylate VII, said structural units being represented by structure IX, wherein the 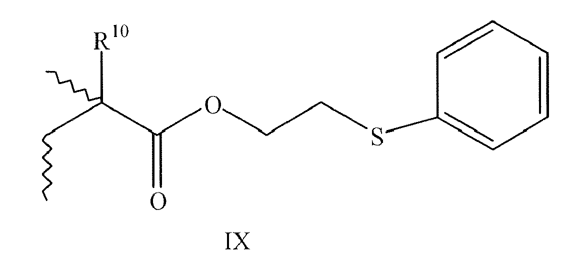 wherein R¹⁰ is hydrogen or methyl, and further wherein the wavy lines 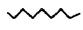 indicate the connections to adjacent structural units within the cured composition. Those skilled in the art will appreciate that in most instances, the non-polymerizable components of the curable composition will be present in the cured composition as well.

In one embodiment, the present invention provides a cured composition comprising:
(a) at least one C₁₀-C₄₀ aliphatic acid, wherein said aliphatic acid is present in an amount corresponding to from about 0.01 to about 1 weight percent based upon a total weight of the cured composition;
(b) structural units derived from at least one multifunctional (meth)acrylate represented by the structure I 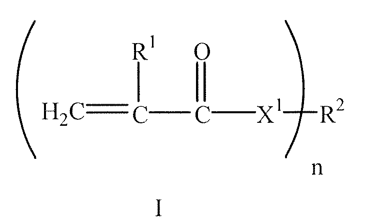 wherein R¹ is hydrogen or methyl; X¹ is O, S, or Se; n is at least 2; and R² is a polyvalent aromatic radical; and
(c) structural units derived from at least one monofunctional (meth)acrylate.

The curable compositions of the present invention may, optionally, further comprise an additive selected from flame retardants, antioxidants, thermal stabilizers, ultraviolet stabilizers, dyes, colorants, anti-static agents, and the like, and a combination comprising at least one of the foregoing additives, so long as the additive does not deleteriously affect the polymerization of the composition.

The curable compositions of the present invention provide materials having excellent refractive indices without the need for the addition of known high refractive index additives. Such compositions, when cured into microstructured films, provide films exhibiting excellent brightness.

The curable composition may be prepared by simply blending the components thereof, with efficient mixing to produce a homogeneous mixture. When forming articles from the curable composition, it is often preferred to remove air bubbles by application of vacuum or the like, with gentle heating if the mixture is viscous. The composition can then be charged to a mold that may bear a microstructure to be replicated and polymerized by exposure to ultraviolet radiation or heat to produce an article comprising the cured composition.

In one embodiment, the curable composition is applied as a liquid to a surface of a base film substrate. The coated base film is then passed through a compression nip defined by a nip roll and a casting drum, the casting drum having a negative pattern master of the microstructures desired in the cured film. The compression nip applies a sufficient pressure to the uncured composition and the base film substrate to control the thickness of the coating of the curable composition and to press the composition into full dual contact with both the base film substrate and the casting drum to exclude any air between the composition and the drum. The base film substrate can be made of any material that can provide a sufficient backing for the curable composition such as, for example, polymethyl methacrylate (i.e., PLEXIGLASS ™), polyester (e.g. MYLAR™), polycarbonate (such as LEXAN™), polyvinyl chloride (VELBEX ®), or even paper. In a preferred embodiment, the base film substrate is a bisphenol A polycarbonate film.

In one embodiment, the curable composition is cured by directing radiation energy through the base film substrate from the surface opposite the surface coated with the curable composition while the curable composition is in full contact with the casting drum to cause the microstructured pattern of the casting drum to be replicated in the cured composition layer. This process is particularly suited for continuous preparation of a cured composition disposed upon transparent substrate.

In one embodiment, the curable compositions are preferably cured by UV radiation. The wavelength of the UV radiation may be from about 1800 angstroms to about 4000 angstroms. Suitable wavelengths of UV radiation include, for example, UVA, UVB, UVC, UVV, and the like; the wavelengths of the foregoing are well known in the art. The lamp systems used to generate such radiation include ultraviolet lamps and discharge lamps, as for example, xenon, metallic halide, metallic arc, low or high pressure mercury vapor discharge lamp, and the like. The term "curing" includes both polymerization (chain growth steps) and, optionally, cross-linking steps to form a non-tacky material.

When heat curing is used, the temperature selected is typically in a range from about 80° to about 130°C. Within this range, a temperature of greater than or equal to about 90°C may be preferred. Also within this range, a temperature of greater than or equal to about 100°C may be preferred. The heating period is typically in a range of from about 30 seconds to about 24 hours. In certain embodiments, it may be preferred to use a heating time of greater than or equal to about 1 minute, more preferably greater than or equal to about 2 minutes. Such curing may be staged to produce a partially cured and often tack-free composition, which then is fully cured by heating for longer periods. In one embodiment, the composition may be both heat cured and UV cured.

In one embodiment, the curable composition is may be used in a continuous process to prepare a cured film material in combination with a substrate. To achieve the rapid production of cured material using a continuous process, the composition preferably cures in a short amount of time.

Current manufacturing processes for the low cost production of cured films, particularly light management films, require rapid and efficient curing of materials followed by easy release of the cured film from the mold. The curable compositions of the present invention have been found to efficiently cure under typical conditions employed for the rapid, continuous production of cured, coated films employing UV irradiation. Such compositions exhibit excellent relative degree of cure under a variety of processing conditions.

In one embodiment, a curable composition comprises about 80 to about 20 weight percent of a multifunctional (meth)acrylate; about 20 to about 80 weight percent of a monofunctional (meth)acrylate, 0.01 to about 1 weight percent of an aliphatic a C₁₀-C₄₀ aliphatic acid, and about 0.1 to about 2 weight percent of a phosphine oxide photoinitiator.

Other embodiments of the present invention include articles made from any of the curable compositions. Articles that may be fabricated from the compositions of the present invention include, for example, optical articles, such as light management films for use in back-light displays, projection displays, traffic signals, illuminated signs, optical lenses; Fresnel lenses, optical disks, diffuser films, holographic substrates, and as substrates in combination with conventional lenses, prisms or mirrors.

### EXAMPLES

The following examples are intended only to illustrate methods and embodiments in accordance with the invention, and as such should not be construed as imposing limitations upon the claims. Unless specified otherwise, all ingredients are commercially available.

### General Method of Brightness Enhancement Film Formation

A roll-to-roll film coating process was used to prepare brightness enhancement film samples. In this process, a UV-curable resin coating formulation was coated onto sections roughly 12 inches square on the surface of a continuous polycarbonate substrate film. Coated sections were separated from adjacent coated sections by an uncoated section of the substrate film. The coated surface of the substrate film was then brought into contact with a cast roll such that the coating was squeezed between the substrate film and the cast roll. The cast roll possessed a textured surface having a complimentary geometry to the geometry desired for the surface features of brightness enhancement film. The UV-curable resin coating formulation was irradiated with UV-light through the back (the side opposite the coated surface of the substrate film) of the substrate film using a UV lamp. The UV light wavelength and intensity were such that the UV-curable resin coating formulation polymerized while still in contact with the cast roll. As a result, a complimentary image of the surface features of the cast roll was replicated on the surface of the product brightness enhancement film sample. Subsequently, the product brightness enhancement film sample disposed on the substrate film was peeled from the cast roll as the continuous polycarbonate film was drawn forward. The brightness enhancement film sample comprised the polymerized UV-curable resin coating formulation bearing a positive image of the surface features of the cast roll, said brightness enhancement film sample being disposed on the surface of the continuous polycarbonate substrate film. In a typical experiment, from several dozen to several hundred nominally identical film samples disposed on the surface of the continuous substrate film were prepared.

A sonometer was used to measure the sound generated as the product brightness enhancement film samples disposed on the substrate film were peeled from the cast roll. For each of the Examples and Comparative Examples described herein, the sound level was measured during peeling from the cast roll of a plurality of brightness enhancement film samples prepared from the UV-curable resin coating formulation of the individual Examples and Comparative Examples. When switching from one UV-curable resin coating formulation to another, a suitable number of film samples were prepared and peeled from the cast roll until the noise level generated by the peeling process stabilized. The sound level was taken to be a measure of the relative ease with which the product brightness enhancement film was disengaged from the surface of the cast roll, a lower level of sound (lower number of decibels) indicating greater ease of disengaging the cured brightness enhancement film sample from the cast roll. Conversely, a higher level of sound (greater number of decibels) was taken to indicate a greater difficulty in disengaging the cured brightness enhancement film sample from the cast roll. It is believed that easier release from the cast roll is desirable for a number of reasons, among them: less of the cured resin adheres to the cast roll as the film sample is peeled from the cast roll.

### Comparative Example 1

A UV-curable resin coating formulation Lot No. N2241201 was employed. The formulation comprised 60 parts by weight (pbw) brominated epoxy acrylate EBCRYL 51027, 40 pbw phenylthioethyl acrylate, 0.25 pbw of acrylic acid, 0.25 pbw of SILWET 7602 silicone-polyethyleneoxide copolymer release agent, and 0.50 pbw of IRGACURE 819 photoinitiator. In this experiment, a series of film samples was prepared and the noise level generated as the individual film samples were peeled from the cast roll was measured. After 10 or so film samples had been peeled from the cast roll the sound generated by the peeling of a single film sample from the case roll had stabilized at 102 decibels (dB).

### Comparative Example 2

A UV-curable resin coating formulation was prepared which was identical to that employed in Comparative Example 1 with the exception that a higher level of SILWET 7602 was employed. The UV-curable resin coating formulation of Comparative Example 2 was prepared by combining 100 pbw of the UV-curable resin coating formulation of Comparative Example 1 (N2241201) with 0.25 pbw of Silwet 7602. Film samples were made using the UV-curable resin coating formulation and the sound generated as the product brightness enhancement film samples were peeled from the cast roll was measured as in Comparative Example 1. After about 10 film samples had been prepared, the sound level had stabilized at about 83 dB. Thereafter, the UV- curable resin coating formulation was switched back to the formulation employed in Comparative Example 1. After about 20 film samples had been made using the formulation of Comparative Example 1 (N2241201), the sound level had risen and stabilized at 103 dB. These data indicate that a higher level of SILWET 7602 facilitates release of the cured resin from the cast roll.

### Example 1

The UV-curable resin coating formulation comprised 100 parts by weight (pbw) of the UV-curable resin coating formulation of Comparative Example 1 (N2241201) to which about 0.25 parts by weight (pbw) palmitic acid had been added. Film samples were made using the UV-curable resin coating formulation and the sound generated as the product brightness enhancement film samples were peeled from the cast roll was measured as in Comparative Example 1. After about 10 film samples had been made, the sound level was measured and found to be about 83 dB. Thereafter, the UV-curable resin coating formulation was switched back to the formulation employed in Comparative Example 1. After about 20 film samples had been made using the formulation of Comparative Example 1 (N2241201), the sound level had risen and stabilized at 103 dB. These data demonstrate that the addition of palmitic acid facilitates release of the cured resin from the cast roll relative to the formulation of Comparative Example 1 (N2241201).

### Comparative Example 3

A series of brightness enhancement film samples disposed on the substrate film were prepared as in Comparative Example 1 on a pilot scale, continuous web coating/curing system using the UV-curable resin coating formulation of Comparative Example 1 (no palmitic acid). The cast roll employed was mounted with shims comprising prismatic features, and film samples were made until after continuous visual inspection of the shim surfaces a blue haze appeared on the shim surfaces. The blue haze was indicative of shim fouling (and hence failure) correlated with the presence of cured polymer nodules having dimensions of approximately 200 nanometers (nm) adhering to the shim surfaces and craters having dimensions of approximately 200 nm in the surface of the cured brightness enhancement film samples. In eight runs, the number of brightness enhancement film samples that could be made before the appearance of the blue haze ranged from about 700 to about 1800 film samples. After each failure, the continuous web coating/curing system had to be shut down in order to replace the nodule-bearing fouled shim with a new shim. The need for replacing shims on such a frequent basis makes this process impractical.

### Comparative Example 4

A series of brightness enhancement film samples disposed on the substrate film were prepared as in Comparative Example 3 using the UV-curable resin coating formulation of Comparative Example 2 (total SILWET 7602 concentration = 0.5%). In four runs, the number of film samples that could be made before the appearance of blue haze ranged from about 500 to about 2000. Even though this higher level of SILWET 7602 facilitated release (See for example Comparative Example 2), the higher level of the SILWET 7602 did not retard the formation of nodules on the shim surfaces.

### Example 2

A series of brightness enhancement film samples disposed on the substrate film were prepared as in Comparative Example 3 using the UV-curable resin coating formulation of Example 1 (SIL WET 7602 concentration = 0.25 weight percent, and palmitic acid concentration = 0.25 weight percent). Two runs were made in which 3000 film samples were prepared. Significantly, no blue haze was observed at the end of the runs. It should be noted that the runs were terminated due to a lack of resin and not because of incipient fouling of the shim surfaces.

### Example 3

A series of brightness enhancement film samples disposed on the substrate film were prepared as in Comparative Example 3 using the UV-curable resin coating formulation of Example 1 (SILWET 7602 concentration = 0.25 weight percent, and palmitic acid concentration = 0.25 weight percent). A single run was made in which 18,137 film samples were prepared. Significantly, no blue haze was observed at the end of the run.

Examples 2 and 3 illustrate the surprising ability of the fatty acid component (palmitic acid) of the UV-curable resin coating formulation to reduce dramatically the fouling of the shim surfaces and with shim surface fouling crater formation in the product brightness enhancement films.

### Comparative Example 5

The experiment described in Example 3 was continued using the same shim and the UV-curable resin coating formulation of Comparative Example 1. After an additional 1000 brightness enhancement film samples had been prepared, a blue haze appeared on the shim surfaces. This example illustrates that when resin containing palmitic acid is replaced by resin with no palmitic acid, only a limited number of films can be made before failure due to formation of blue haze.

The foregoing examples are merely illustrative, serving to illustrate only some of the features of the invention. The appended claims are intended to claim the invention as broadly as it has been conceived and the examples herein presented are illustrative of selected embodiments from a manifold of all possible embodiments. Accordingly, it is Applicants' intention that the appended claims are not to be limited by the choice of examples utilized to illustrate features of the present invention. As used in the claims, the word "comprises" and its grammatical variants logically also subtend and include phrases of varying and differing extent such as for example, but not limited thereto, "consisting essentially of" and "consisting of." Where necessary, ranges have been supplied, those ranges are inclusive of all sub-ranges there between. It is to be expected that variations in these ranges will suggest themselves to a practitioner having ordinary skill in the art and where not already dedicated to the public, those variations should where possible be construed to be covered by the appended claims. It is also anticipated that advances in science and technology will make equivalents and substitutions possible that are not now contemplated by reason of the imprecision of language and these variations should also be construed where possible to be covered by the appended claims.

## Claims

1. A curable composition comprising:
(a) at least one C₁₀-C₄₀ aliphatic acid, wherein said aliphatic acid is present in an amount corresponding to from about 0.01 to about 1 weight percent based upon a total weight of the composition; and
(b) at least one multifunctional (meth)acrylate represented by the structure I 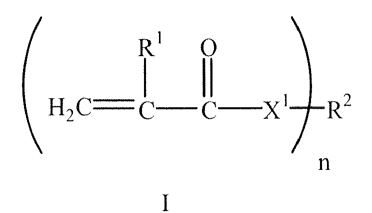
wherein R¹ is hydrogen or methyl; X¹ is O, S, or Se; n is at least 2; and R² is a polyvalent aromatic radical.

2. A curable composition comprising:
(a) at least one C₁₀-C₄₀ aliphatic acid, wherein said aliphatic acid is present in an amount corresponding to from about 0.01 to about 1 weight percent based upon a total weight of the composition;
(b) a multifunctional (meth)acrylate represented by the structure I 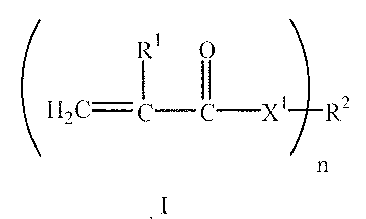 wherein R¹ is hydrogen or methyl; X¹ is O, S, or Se; n is at least 2; and R² is a polyvalent aromatic radical; and
(c) at least one monofunctional (meth)acrylate.

3. The curable composition according to claim 1 or claim 2, wherein said aliphatic acid comprises structure II 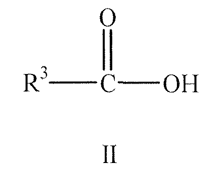 wherein R³ is a C₉-C₃₉ aliphatic radical.

4. The curable composition according to claim 3, wherein said aliphatic acid comprises at least one fatty acid selected from the group consisting of myristic acid, palmitic acid, stearic acid, oleic acid, linoleic acid, linolenic acid, and eicosanoic acid.

5. The curable composition according to claim 1 or claim 2, wherein R² is a divalent aromatic radical having structure III 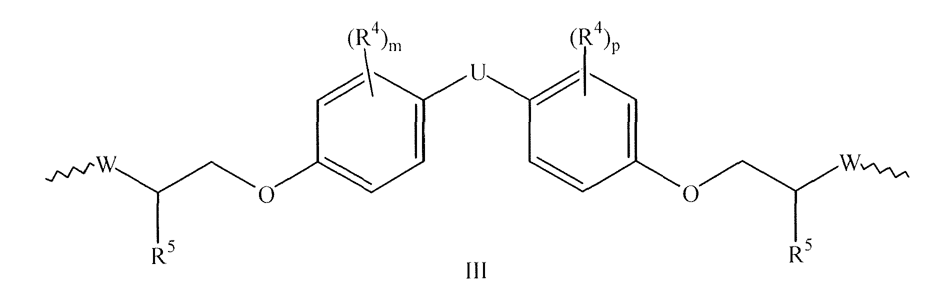 and wherein U is a bond, an oxygen atom, a sulfur atom, a selenium atom, an SO₂ group, an SO group, a CO group, a C₁-C₂₀ aliphatic radical, C₃-C₂₀ cycloaliphatic radical, or a C₃-C₂₀ aromatic radical; R⁴ is independently at each occurrence a halogen atom, a nitro group, a cyano group, an amino group, a hydroxy group, a C₁-C₂₀ aliphatic radical, a C₃-C₂₀ cycloaliphatic radical, or a C₃-C₂₀ aromatic radical; R⁵ is independently at each occurrence a hydrogen atom, a hydroxy group, a thiol group, or an amino group; W is a bond, a divalent C₁-C₂₀ aliphatic radical, a divalent C₃-C₂₀ cycloaliphatic radical, a divalent C₃-C₂₀ aromatic radical; and "m" and "p" are independently integers ranging from 0 to 4.

6. The curable composition according to claim 2, wherein the multifunctional (meth)acrylate comprises at least one di(meth)acrylate having structure IV 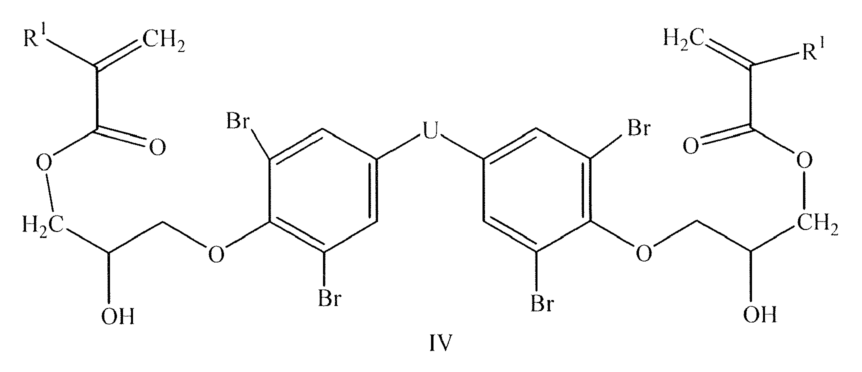 wherein R¹ is hydrogen or methyl, and U is a bond, an oxygen atom, a sulfur atom, a selenium atom, an SO₂ group, an SO group, a CO group, a C₁-C₂₀ aliphatic radical, C₃-C₂₀ cycloaliphatic radical, or a C₃-C₂₀ aromatic radical.

7. The curable composition according to claim 2, further comprising at least one silicone-containing surfactant.

8. A curable composition comprising:
(a) at least one C₁₀-C₄₀ aliphatic acid, wherein said aliphatic acid is present in an amount corresponding to from about 0.01 to about 1 weight percent based upon a total weight of the composition;
(b) a multifunctional (meth)acrylate represented by the structure I 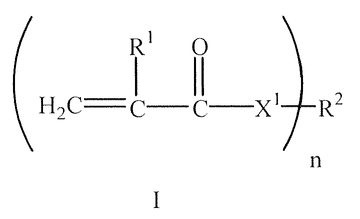 wherein R¹ is hydrogen or methyl; X¹ is O, S, or Se; n is 2; and R² is a divalent aromatic radical;
(c) at least one monofunctional (meth)acrylate having structure VI 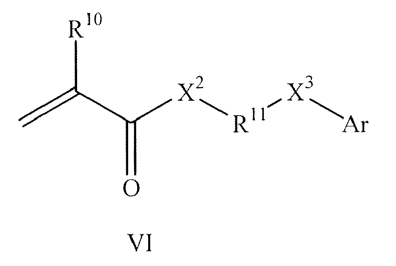 wherein R¹⁰ is hydrogen or methyl; X² and X³ are independently in each instance O, S, or Se; R¹¹ is a divalent C₁-C₂₀ aliphatic radical, a divalent C₃-C₂₀ cycloaliphatic radical, or a divalent C₃-C₂₀ aromatic radical; and Ar is monovalent C₃-C₂₀ aromatic radical; and
(d) at least one silicone-containing surfactant, said at least one silicone-containing surfactant being present in an amount corresponding to from about 0.1 to about 1 weight percent based upon the total weight of the composition.

9. A curable composition comprising:
(a) palmitic acid, wherein said palmitic acid is present in an amount corresponding to from about 0.01 to about 1 weight percent based upon a total weight of the composition;
(b) a multifunctional (meth)acrylate represented by the structure IV 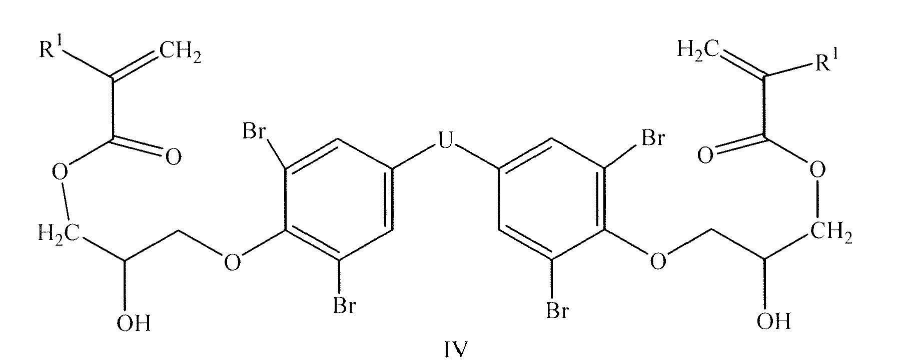 wherein R¹ is hydrogen or methyl, and U is a bond, an oxygen atom, a sulfur atom, a selenium atom, an SO₂ group, an SO group, a CO group, a C₁-C₂₀ aliphatic radical, C₃-C₂₀ cycloaliphatic radical, or a C₃-C₂₀ aromatic radical;
(c) at least one monofunctional (meth)acrylate having structure VI 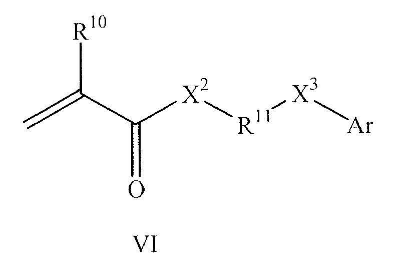 wherein R¹⁰ is hydrogen or methyl; X² and X³ are independently in each instance O, S, or Se; R¹¹ is a divalent C₁-C₂₀ aliphatic radical, a divalent C₃-C₂₀ cycloaliphatic radical, or a divalent C₃-C₂₀ aromatic radical; and Ar is monovalent C₃-C₂₀ aromatic radical; and
(d) at least one silicone-containing surfactant, said at least one silicone-containing surfactant being present in an amount corresponding to from about 0.1 to about 1 weight percent based upon the total weight of the composition.

10. A cured composition comprising:
(a) at least one C₁₀-C₄₀ aliphatic acid, wherein said aliphatic acid is present in an amount corresponding to from about 0.01 to about 1 weight percent based upon a total weight of the cured composition;
(b) structural units derived from at least one multifunctional (meth)acrylate represented by the structure I 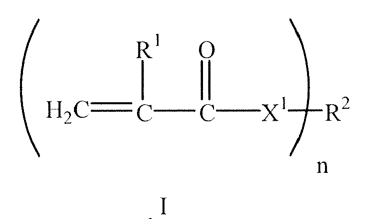 wherein R¹ is hydrogen or methyl; X¹ is O, S, or Se; n is at least 2; and R² is a polyvalent aromatic radical; and
(c) structural units derived from at least one monofunctional (meth)acrylate.
